# DEMANDE DE BREVET EUROPEEN

(11) **EP 4 567 421 A1**
(43) Date de publication de la demande: **11.06.2025**
(21) Numéro de dépôt: 24210928.8
(22) Date de dépôt: 05.11.2024
(51) Int. Cl.: G01N 30/60, G01N 30/08, G01N 30/88, G01N 30/64

(54) **DISPOSITIF MICROFLUIDIQUE EMPLOYÉ POUR LE PRÉLÈVEMENT, LA PRÉCONCENTRATION, LA SÉPARATION OU LA DÉTECTION DE GAZ**

(30) Priorité: 06.12.2023 FR 2313618
(71) Demandeur: Commissariat à l'Energie Atomique et aux Energies Alternatives, 75015 Paris (FR)
(72) Inventeur: RICOUL, Florence, 38054 GRENOBLE CEDEX 09 (FR); VERPLANCK, Nicolas, 38054 GRENOBLE CEDEX 09 (FR); CHARLES, Raymond, 38054 GRENOBLE CEDEX 09 (FR); CAPLET, Stéphane, 38054 GRENOBLE CEDEX 09 (FR); KEISER, Armelle, 38054 GRENOBLE CEDEX 09 (FR)
(74) Mandataire: INNOV-GROUP

(57) **Abrégé**

L'invention concerne un dispositif microfluidique comportant :
- Un composant support (1) qui comporte :
∘ Un canal fluidique d'entrée (13) et un canal fluidique de sortie (14) distincts, intégrés au corps (10) dudit composant et débouchant chacun respectivement au niveau du premier motif saillant et/ou du deuxième motif saillant,

- Un composant microfluidique (2) distinct du composant support (1), comprenant :
o Un circuit électrique,
o Un circuit fluidique comprenant au moins une entrée fluidique (23) et une sortie fluidique (24),

- Ledit composant microfluidique (2) comportant une première face agencée pour venir en appui contre le composant support (12) pour être surélevé par rapport à une surface de réception,
- Un système de bridage mécanique pour assurer un maintien du composant microfluidique (2) contre le composant support (1),
- Des moyens de connexion électrique agencés pour se connecter sur le circuit électrique du composant microfluidique.

## Description

### Domaine technique de l'invention

La présente invention se rapporte à un dispositif microfluidique pouvant notamment être employé pour le prélèvement, la préconcentration, la séparation ou la détection de gaz.

### Etat de la technique

De manière connue, un composant microfluidique en silicium utilisé pour la préconcentration de gaz comporte une cavité remplie d'un matériau adsorbant et des moyens de chauffage contrôlés afin d'établir une température dans sa cavité. Ce type de composant est notamment destiné à recevoir un flux gazeux et permet de bloquer/stocker dans sa cavité des composés du flux gazeux ou de les libérer totalement ou partiellement. Une telle unité, de faible capacité thermique, peut en effet rapidement et à faible puissance, être contrôlée thermiquement. La température à laquelle l'unité est chauffée permet de faire varier les constantes d'équilibre d'adsorption des composés sur la phase adsorbante. Des tables permettent notamment d'indiquer les composés qui seront fixés ou relargués par une unité de préconcentration en fonction de la nature de l'adsorbant utilisé, ainsi que de la température fixée au niveau de l'unité.

Ce type de composant de préconcentration est notamment employé dans des systèmes miniaturisés plus complets d'analyse de gaz. Le composant microfluidique peut être ainsi couplé à une colonne de chromatographie. Dans ces systèmes miniaturisés, pour faire circuler les gaz, les composants sont par exemple connectés entre eux en utilisant des capillaires assemblés par collage. Cette solution de connexion fluidique présente cependant plusieurs inconvénients :
- Elle oblige à venir coller chaque capillaire sur les composants ;
- Il existe un risque non négligeable de fuite au niveau des connexions fluidiques ;

Pour pallier ces inconvénients, la solution décrite dans la demande de brevet WO2020/170070A1 consiste à venir employer un module microfluidique pour faire l'interface entre un composant microfluidique de type préconcentrateur et une colonne de chromatographie. Ce module microfluidique permet d'assurer les connexions fluidiques à l'aide de joints et de moyens de bridage mécanique.

Cependant, la solution décrite dans ce document n'est pas aboutie en ce que le composant est monté en porte-à-faux sur le module, pouvant entraîner des risques de rupture mécanique ainsi que des défauts de fiabilité au niveau des connexions fluidiques. En outre, l'agencement proposé ne permet pas de gérer de manière fiable les conditions thermiques de fonctionnement du module indépendamment du composant microfluidique de type préconcentrateur et de la colonne de chromatographie.

Le brevet EP2872892B1 décrit une autre architecture de composant microfluidique.

Pour fonctionner de manière fiable, un composant microfluidique, par exemple en silicium comme dans l'état de la technique, doit répondre aux exigences suivantes :
- Disposer de connexions fluidiques faciles à mettre en oeuvre, tout en restant parfaitement étanches quelles que soient les conditions de fonctionnement ;
- Être isolé thermiquement, tout en permettant une gestion fiable des conditions thermiques de fonctionnement ;
- Disposer d'une architecture suffisamment compacte et facilement manipulable ;
- Être facilement connectable électriquement à une unité externe ;

Le but de l'invention est donc de proposer un dispositif microfluidique intégrant un composant microfluidique, comme par exemple un composant de type préconcentrateur, qui soit adapté pour répondre à ces exigences.

### Exposé de l'invention

Ce but est atteint par un dispositif microfluidique comportant :
- Un composant support qui comporte :
   ∘ Un corps présentant au moins une surface de réception,
   ∘ Sur la surface de réception, un motif saillant et un deuxième motif saillant, émergeant chacun par rapport à ladite surface de réception,
   ∘ Un canal fluidique d'entrée et un canal fluidique de sortie distincts, intégrés au corps dudit composant et débouchant chacun respectivement au niveau du premier motif saillant et/ou du deuxième motif saillant,
- Un composant microfluidique distinct du composant support, comprenant :
   ∘ Un circuit électrique,
   ∘ Un circuit fluidique comprenant au moins une entrée fluidique et une sortie fluidique,
- Ledit composant microfluidique comportant une première face agencée pour venir en appui contre le premier motif saillant et le deuxième motif saillant pour être surélevé par rapport à la surface de réception,
- Des moyens d'étanchéité agencés entre ledit composant microfluidique et ledit composant support pour assurer des connexions fluidiques étanches d'une part entre le canal fluidique d'entrée du composant support et l'entrée fluidique du composant microfluidique et d'autre part entre le canal fluidique de sortie du composant support et la sortie fluidique du composant microfluidique, lorsque le composant microfluidique est positionné en appui contre le premier motif saillant et le deuxième motif saillant,
- Un système de bridage mécanique comprenant au moins une entretoise agencée pour prendre appui contre une deuxième face du composant microfluidique, opposée à sa première face,
- Ledit système de bridage mécanique comportant au moins un capot fixé sur le composant support contre ladite entretoise et agencé pour maintenir ledit composant microfluidique en appui contre le premier motif saillant et le deuxième motif saillant, et pour assurer lesdites connexions fluidiques étanches,
- Des moyens de connexion électrique comprenant plusieurs plots de contact électrique agencés pour se connecter sur le circuit électrique du composant microfluidique.

Selon une particularité, le corps du composant support comporte une cavité au fond de laquelle sont agencés le premier motif saillant et le deuxième motif saillant.

Selon une autre particularité, le corps du composant support comporte un passage latéral débouchant dans ladite cavité.

Selon une autre particularité, ladite au moins une entretoise est formée d'une pièce indépendante en matériau souple.

Selon une autre particularité, le corps du composant support comporte au moins deux encoches réalisées en périphérie de la cavité et agencées pour recevoir chacune une extrémité distincte de ladite au moins une entretoise.

De manière avantageuse, le rapport entre la surface de contact du composant microfluidique contre les deux motifs saillants et la surface de sa première face est compris entre 0.1 et 0.5.

Selon une autre particularité, les moyens de connexion électrique comportent une carte de connexion électrique sur laquelle sont agencés lesdits plots de contact électrique. Selon une autre particularité, le capot comporte plusieurs trous traversants traversés chacun par un plot de contact électrique distinct.

Selon une autre particularité, les moyens d'étanchéité comportent des joints plats ou toriques.

Selon une autre particularité, le circuit électrique du composant microfluidique comporte une résistance chauffante.

Selon une autre particularité, le circuit fluidique du composant microfluidique comporte une cavité remplie d'un matériau adsorbant, agencée entre son entrée fluidique et sa sortie fluidique.

### Brève description des figures

D'autres caractéristiques et avantages vont apparaître dans la description détaillée qui suit faite en regard des dessins annexés dans lesquels :

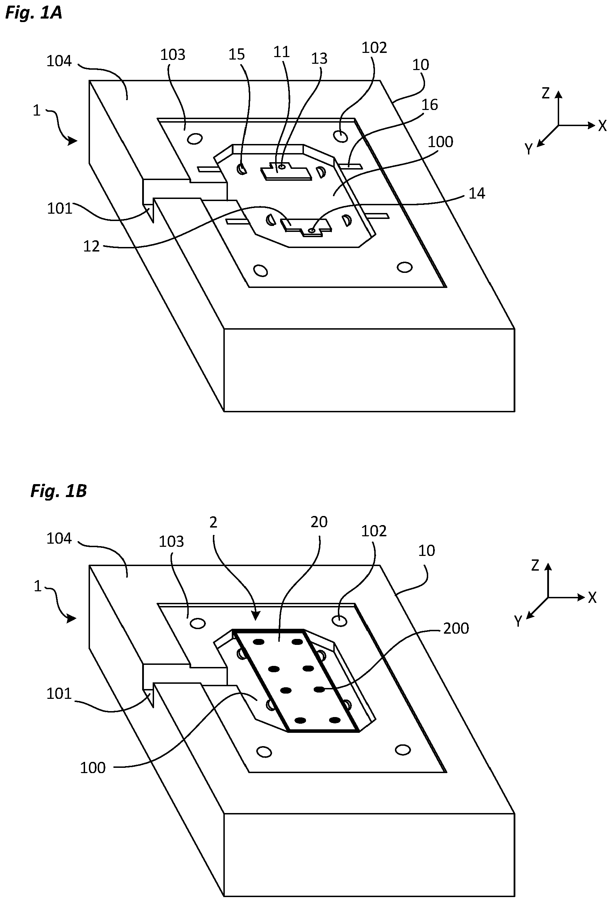

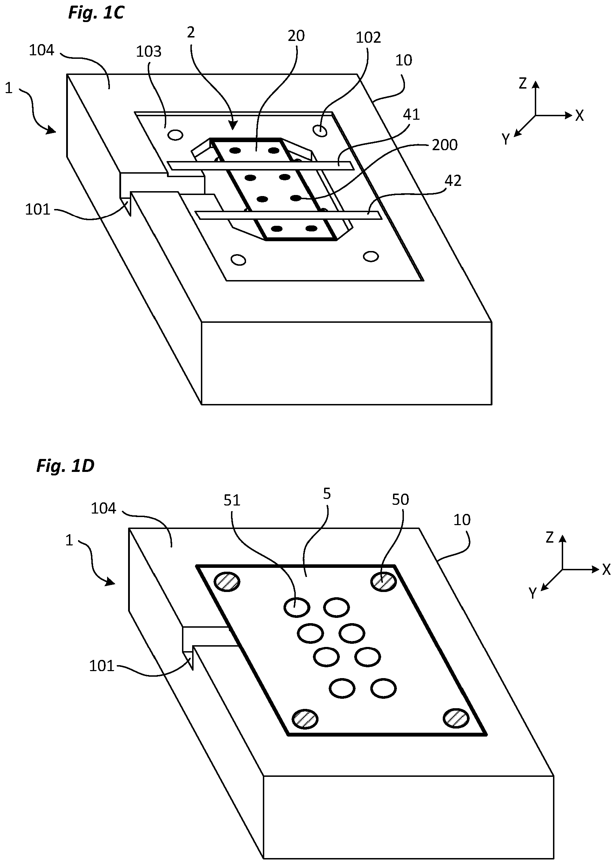

- Les figures 1A à 1E représentent, vu en perspective, le dispositif microfluidique de l'invention, selon les différentes phases de son assemblage ;
- La figure 2 représente en vue en coupe et de manière schématique, le principe de réalisation du dispositif microfluidique de l'invention ;

### Description détaillée d'au moins un mode de réalisation

Le dispositif microfluidique de l'invention comporte principalement :
- Un premier composant, dit composant support 1 ;
- Un deuxième composant, dit composant microfluidique 2, ce composant étant le composant fonctionnel du dispositif ;
- Des moyens d'étanchéité employés pour assurer des connexions fluidiques étanches ;
- Un système mécanique permettant de venir adapter le composant microfluidique 2 sur le composant support 1 ;
- Des moyens de connexion électrique utilisés pour venir connecter une unité externe sur le composant microfluidique 2 ;

Pour la suite de la description, on définit un repère orthonormé X, Y, Z. Les termes employés tels que « supérieur », « inférieur », « au-dessus », « au-dessous » ou équivalents sont à comprendre en se référant à la direction Z tracée verticalement.

### Composant support

Figure 1A
Figure 2

Le composant support 1 présente un corps 10 principal, formé d'une pièce indépendante avantageusement réalisée dans un matériau conducteur thermique, tel qu'un métal ou un alliage métallique. Cette pièce est par exemple en aluminium.

De manière non limitative, le corps 10 du composant support présente une forme externe parallélépipédique.

Le corps 10 du composant support comporte au moins une surface dite surface de réception 104, par exemple formée de sa face supérieure.

De manière avantageuse, la surface de réception 104 peut comporter une cavité 100 creusée de manière adaptée pour accueillir le composant microfluidique 2.

Dans le fond de la cavité 100, le composant support 1 peut porter au moins un motif saillant et avantageusement au moins deux motifs saillants 11, 12 par rapport au fond de la cavité 100. Les deux motifs saillants 11, 12 sont de préférence séparés l'un de l'autre pour créer un passage d'air entre eux. Les deux motifs saillants 11, 12 font avantageusement partie du corps 10 du composant support 1.

Dans son corps 10, le composant support 1 intègre au moins un premier canal fluidique, dit canal fluidique d'entrée 13, et avantageusement un deuxième canal fluidique, dit canal fluidique de sortie 14.

Le canal fluidique d'entrée 13 débouche, d'un côté, suivant la direction Z, avantageusement au niveau du premier motif saillant 11 et de l'autre côté sur une face latérale du corps 10 du composant support 1.

Le canal fluidique de sortie 14 débouche, d'un côté, suivant la direction Z, avantageusement au niveau du deuxième motif saillant 12 et de l'autre côté sur une face latérale du corps 10 du composant support 1, par exemple la face opposée à celle sur laquelle débouche le canal fluidique d'entrée 13.

Chaque canal est par exemple formé en effectuant deux perçages à travers deux faces perpendiculaires du composant support 1, un premier perçage suivant X, Y à travers la face latérale et un perçage selon Z à travers la face supérieure.

Pour connecter chaque canal fluidique sur un système fluidique externe, chaque canal fluidique peut être muni d'un raccord.

Il faut noter que les deux canaux fluidiques 13, 14 pourraient déboucher au niveau d'un seul et même motif saillant 11, 12, l'autre motif saillant ne faisant alors qu'exercer l'unique fonction de surélévation.

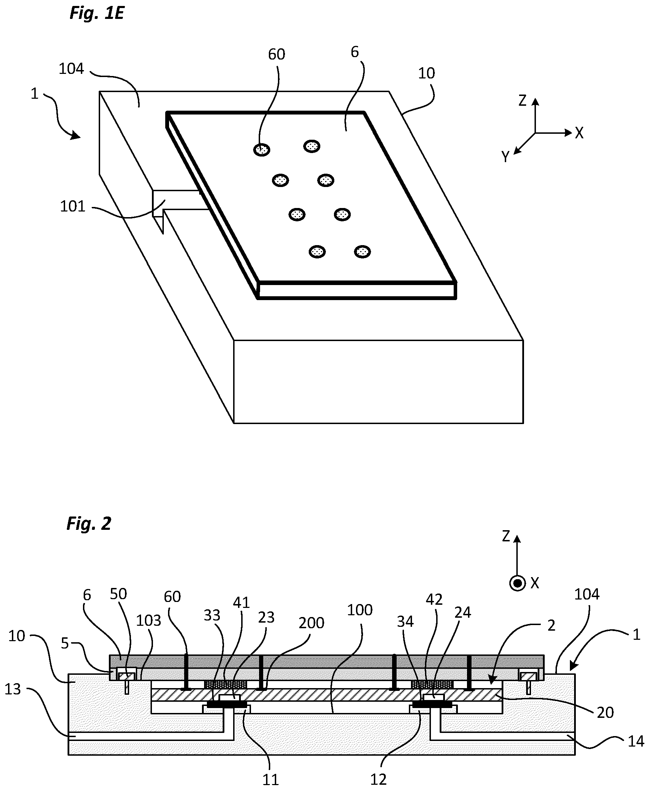

De manière avantageuse, l'embouchure de chaque canal fluidique peut disposer sur son pourtour d'une empreinte de forme adaptée pour accueillir un joint torique ou plat (visible figure 2 - voir ci-après).

De manière avantageuse, le composant support 1 peut comporter plusieurs butées d'alignement 15 agencées dans la cavité 100 pour caler mécaniquement le composant microfluidique dans le plan X, Y.

Le corps 10 du composant support 1 comporte avantageusement un passage latéral 101 réalisé sur une face latérale et débouchant à l'intérieur de la cavité 100.

En périphérie de la cavité 100, la surface de réception peut disposer de plusieurs perçages 102 destinés à accueillir des vis de fixation d'un capot (voir ci-après) du système mécanique. La surface de réception peut également disposer d'une empreinte d'encastrement 103, de forme adaptée pour accueillir ledit capot, réalisée en périphérie desdits perçages.

Sur le pourtour de la cavité 100, le composant support 1 peut disposer de plusieurs encoches 16 agencées symétriquement deux à deux. Entre deux encoches, on vient ensuite disposer une entretoise (voir ci-après).

De manière avantageuse, le corps du composant support 1 est structuré par usinage. On vient donc usiner la face supérieure du corps 10, pour former la cavité 100, les deux motifs saillants 11, 12, le passage latéral 101, les perçages 102, les encoches 16, l'empreinte d'encastrement 103, les butées d'alignement 15. Le corps est donc une pièce monobloc, obtenue directement, sans assemblage externe. Cependant, il serait bien entendu possible de réaliser le composant support en plusieurs pièces, assemblées entre elles, par collage ou un autre solution adaptée.

### Composant microfluidique

Figure 1B
Figure 2

Comme indiqué ci-dessus, le composant microfluidique 2 correspond au composant fonctionnel du dispositif. Il est destiné à réaliser une fonction, qui peut être une fonction de prélèvement, d'analyse, de détection... Il peut par exemple s'agir d'un préconcentrateur, d'une colonne de séparation chromatographique, d'un détecteur de conductivité thermique (appelé couramment TCD), ou de tout autre type de capteur (résistif, inductif...) ou de moyens électriques tels que des moyens de chauffage électrique.

Il comporte ainsi au moins un circuit électrique utilisé pour la mise en oeuvre de sa fonction.

Il comporte également un circuit fluidique comportant au moins une entrée fluidique 23 et une sortie fluidique 24, entre lesquelles peut circuler le fluide à prélever/analyser.

Dans une fonction de type préconcentrateur, le composant microfluidique 2 comporte une cavité remplie d'un matériau adsorbant et des moyens de chauffage électriques contrôlés afin d'établir une température dans sa cavité. Ce type de composant est notamment destiné à recevoir un flux gazeux et permet de bloquer/stocker dans sa cavité des composés du flux gazeux ou de les libérer totalement ou partiellement.

De manière non limitative, le composant microfluidique 2 est par exemple réalisé sous la forme d'une puce 20 composée d'un substrat en silicium (dont une des faces contient des plots de connexion électrique au circuit électrique du composant) et d'un capot, par exemple en verre ou en silicium, assemblé sur le substrat de silicium (par exemple par scellement anodique ou collage), et dans lequel sont réalisées l'entrée fluidique 23 et la sortie fluidique 24.

La puce 20 est par exemple de forme rectangulaire, ayant une face supérieure et une face inférieure s'étendant chacune dans le plan X, Y, son épaisseur dans la direction Z étant avantageusement faible au regard des deux autres dimensions.

Selon un aspect particulier de l'invention, la puce 20 formant le composant microfluidique 2 vient se positionner dans la cavité 100 du composant support 1, en appui par sa face inférieure contre les deux motifs saillants 11, 12. Elle est ainsi en surélévation par rapport au fond de la cavité 100. Les butées d'alignement 15 sont positionnées pour caler ladite puce 20 en X, Y. La puce 20 présente donc une taille adaptée pour venir se positionner dans la cavité du composant support, calée en X, Y par les butées d'alignement 15.

De manière avantageuse, le rapport entre la surface de contact de la face inférieure de la puce 10 contre les deux motifs saillants 11, 12 et la surface totale de la face inférieure de la puce 20 est compris entre 0.1 et 0.5, avantageusement égal à 0.25. De cette manière, la dissipation thermique peut être optimisée, le contact étant minimisé entre les deux éléments.

L'entrée fluidique 23 et la sortie fluidique 24 du composant microfluidique sont agencées sur le composant microfluidique 2 pour être positionnées en vis-à-vis, respectivement, de l'embouchure du canal fluidique d'entrée 13 et de l'embouchure du canal fluidique de sortie 14 du composant support 1, lorsque le composant microfluidique est calé mécaniquement sur le composant support 1.

Il faut noter que le passage latéral 101 réalisé dans le composant support 1 est réalisé pour déboucher dans la cavité 100, les motifs saillants 12, 13 étant dimensionnés pour surélever le composant microfluidique 2 de manière suffisante pour que le passage latéral débouche au moins partiellement sous le composant microfluidique 2 lorsque celui-ci est positionné et calé dans la cavité 100.

Sur sa face supérieure, la puce 20 du composant microfluidique comporte plusieurs points de connexion électrique 200, permettant de venir relier son circuit électrique à une unité externe destinée à son alimentation et son contrôle.

### Moyens d'étanchéité

### Figure 2

Selon un aspect particulier de l'invention, le dispositif comporte des moyens d'étanchéité agencés pour assurer les connexions fluidiques étanches entre le composant support et le composant microfluidique.

De manière non limitative, ces moyens d'étanchéité peuvent comporter un premier joint 33, par exemple torique ou plat, agencé pour assurer la connexion fluidique étanche entre le canal fluidique d'entrée 13 du composant support 1 et l'entrée fluidique 23 du composant microfluidique 2 et un deuxième joint 34, par exemple torique ou plat, agencé pour assurer la connexion fluidique entre le canal fluidique de sortie 14 du composant support 1 et la sortie fluidique 24 du composant microfluidique 2.

Selon la configuration des connexions fluidiques à étanchéifier, d'autres solutions pourraient bien entendu être envisagées. La forme du joint pourrait en effet être adaptée à la position et à la forme des connexions fluidiques à réaliser.

### Système mécanique de bridage

Figure 1C
Figure 1D
Figure 2

Selon un aspect particulier de l'invention, le dispositif comporte un système mécanique ayant pour fonction de :
- Maintenir le composant microfluidique 2 en appui contre les deux motifs saillants 11, 12 ;
- Assurer des connexions fluidiques étanches entre la partie fluidique du composant support 1 et la partie fluidique du composant microfluidique 2 ;
- Laisser le passage latéral 101 ouvert pour permettre une dissipation thermique du composant microfluidique 2 ;

Le système mécanique comporte avantageusement un dispositif d'entretoise venant se positionner au moins partiellement contre une partie uniquement de la face supérieure du composant microfluidique. Avantageusement, ce dispositif peut comporter deux entretoises 41, 42.

Chaque entretoise 41, 42 est avantageusement réalisée dans un matériau souple, isolant thermiquement, par exemple en silicone.

Chaque entretoise est avantageusement positionnée pour s'étendre entre deux encoches 16 d'appui distinctes réalisées chacune sur un bord distinct délimitant la cavité 100 du composant support 1, chaque encoche 16 étant réalisée pour permettre à l'entretoise 41, 42 de transmettre un appui mécanique suffisant contre le composant microfluidique 2, pour que ce dernier vienne ensuite s'appuyer suffisamment contre les deux motifs saillants 11, 12 placés à l'aplomb au fond de la cavité.

Il faut noter que chaque entretoise 41, 42 vient avantageusement se positionner en X, Y au-dessus d'un motif saillant 11, 12 distinct, séparé de celui-ci par l'épaisseur de la puce 20.

Le système mécanique de bridage comporte également un capot 5 venant s'appuyer contre les entretoises 41, 42. Ce capot 5 vient se fixer sur le composant support 1, par exemple à l'aide de vis 50 adaptées pour se visser dans les perçages 102 dédiés. Le capot 5 vient ainsi exercer une fonction de bridage pour maintenir le composant microfluidique 2 en place sur le composant support 1 et assurer, in fine, l'étanchéité au niveau des connexions fluidiques. Ce capot 5 est dimensionné pour venir se caler en X, Y dans l'empreinte d'encastrement 103 dédiée, réalisée en périphérie de la cavité 100.

Il faut noter que la présence des entretoises 41, 42 entre le capot 5 et le composant microfluidique 2 permet de minimiser le contact mécanique entre ces deux éléments, permettant de réduire au maximum les échanges thermiques et de laisser la face supérieure du composant microfluidique 2 en contact avec l'air ambiant, via le passage latéral 101 du composant support 1.

De manière avantageuse, le capot 5 peut comporter plusieurs trous 51 traversants selon Z. Chaque trou traversant est réalisé de manière à venir se positionner en vis-à-vis d'un point de connexion électrique 200 distinct du composant microfluidique 2 lorsque le composant microfluidique 2 est calé dans la cavité et le capot 5 encastré dans le composant support 1.

Le capot 5 et les entretoises 41, 42 peuvent être réalisés en plusieurs pièces distinctes. Mais il serait également possible de les réunir en une seule pièce. Les entretoises 41, 42 peuvent par exemple être surmoulées sur le capot 5.

### Moyens de connexion électrique

Figure 1E
Figure 2

Etant donné que le composant microfluidique 2 comporte au moins un circuit électrique, celui-ci doit pouvoir être relié à une unité externe (non représentée) pour alimentation et contrôle.

Dans le cas d'un circuit électrique qui intègre une résistance chauffante, il pourra s'agir de venir alimenter et contrôler la température de chauffage, en utilisant, éventuellement en complément, une sonde de température, par exemple intégrée au composant microfluidique 2.

Les moyens de connexion électrique comportent avantageusement une carte 6 de connexion électrique, indépendante ou solidaire du capot 5. Lorsque la carte 6 et le capot 5 sont solidaires, ils forment une seule pièce monobloc, venant remplir les deux fonctions.

La carte 6 de connexion électrique vient se positionner au-dessus du capot 5 et se fixer en appui par sa face inférieure contre la face supérieure du capot 5.

Cette carte 6 peut comporter sur sa face inférieure plusieurs plots 60 de contact électrique. Comme indiqué ci-dessus, le capot 5 comporte plusieurs trous traversants 51 suivant Z, chaque trou 51 pouvant être traversé par au moins un plot 60 de contact électrique distinct de la carte 6 de connexion électrique.

L'extrémité libre de chaque plot 60 de contact électrique est agencée pour venir en appui contre un point de connexion électrique 200 distinct du circuit électrique du composant microfluidique 2.

A titre d'exemple, la carte 6 peut comporter deux plots de contact électrique pour alimenter une résistance chauffante du circuit électrique du composant microfluidique 2 et deux autres plots de contact électrique pour se connecter sur une sonde de température. La carte 6 de connexion électrique peut ensuite être connectée sur l'unité externe, employée pour alimenter la résistance et réguler la température de chauffage, via la sonde.

Il faut noter que les plots 60 de contact électrique doivent être saillants par rapport au plan inférieur du capot 5 et choisis avec une course de contact supérieure à l'épaisseur des entretoises 41, 42, pour venir contacter chacun un point de connexion électrique 200 distinct du circuit électrique du composant microfluidique 2.

### Architecture avantageuse du dispositif et avantages

### Figure 2

Considérant les différents éléments décrits ci-dessus, en résumé, une architecture avantageuse du dispositif est donc la suivante :
- Le composant support 1, réalisé en aluminium, usiné sur sa face supérieure pour former la cavité 100, les motifs saillants 11, 12 au fond de la cavité, les encoches 16 de réception pour deux entretoises, les butées d'alignement 15 du composant microfluidique 2, l'empreinte d'encastrement 103 du capot 5, les perçages 102 de fixation du capot 5, le passage latéral 101, le canal fluidique d'entrée 13 et le canal fluidique de sortie 14 ;
- Les moyens d'étanchéité, composés de deux joints toriques 33, 34, chacun positionné au niveau de l'embouchure, respectivement du canal fluidique d'entrée 13 et du canal de sortie 14 sur la face supérieure du composant support 1 ;
- Le composant microfluidique 2 venant se positionner en appui contre les deux motifs saillants 11, 12, en établissant les connexions fluidiques entre son entrée fluidique 23 et sa sortie fluidique 24, respectivement avec le canal fluidique d'entrée 13 et le canal fluidique de sortie 14, en venant écraser les deux joints toriques 33, 34 positionnés sur ces connexions ;
- Deux entretoises 41, 42 positionnées en appui contre la face supérieure du composant microfluidique 2 ;
- Un capot 5 venant se fixer sur le composant support 1, pour exercer un appui suffisant contre les entretoises 41, 42 et transmettre un appui mécanique du composant microfluidique 2 contre le composant support 1 ;
- Une carte 6 de connexion électrique venant se fixer sur le capot 5, ses plots 60 de contact électrique venant traverser les trous 51 réalisés à travers le capot 5 pour se contacter sur les points de connexion électrique 200 disponibles sur la face supérieure du composant microfluidique 2 ;

Il faut noter que dans le cas d'un composant microfluidique 2 intégrant des moyens de chauffage, le composant support 1 peut lui-même être chauffé par un dispositif extérieur.

De manière non limitative, le dispositif peut être conçu et dimensionné de la manière suivante :
- Dimensions du composant microfluidique : 21 x7.6x1.225 mm³
- Diamètre entrée/sortie fluidiques : 500µm
- Diamètre intérieur joints toriques : 1mm et épaisseur 0.5mm
- Matériau du composant support : aluminium
- Matériau du capot : PEEK
- Matériau joints toriques et entretoise : silicone
- Surélévation du composant microfluidique = 500µm

Cette architecture présente ainsi de nombreux avantages, parmi lesquels :
- Protection du composant microfluidique 2 venant se loger dans la cavité 100 et recouvert par le capot 5 ;
- Alignement et mise en place précis et faciles des joints toriques 33, 34 et du composant microfluidique 2, grâce à la présence de zones d'accueil dédiées ;
- Facilité de remplacement du composant microfluidique 2, sans nécessité de collage de capillaire comme dans l'état de la technique, le composant support 1 réalisant l'interface fluidique ;
- Isolation thermique du composant microfluidique 2 vis-à-vis du composant support 1 et du capot 5, grâce à la présence des motifs saillants 11, 12 et des entretoises 41, 42 ;
- Dissipation thermique améliorée permise par la présence du passage latéral 101 et par la surélévation du composant microfluidique 2 ;
- Utilisation avantageuse d'un matériau conducteur thermique (par exemple aluminium) pour le composant support 1, ce qui permet un chauffage facile des canaux fluidiques internes au composant support 1, sans pour autant réduire les vitesses de chauffage des composants et limite l'adsorption de composés peu volatiles sur les parois des canaux fluidiques du support ;

## Revendications

1. Dispositif microfluidique **caractérisé en ce qu'**il comporte :
- Un composant support (1) qui comporte :
∘ Un corps (10) présentant au moins une surface de réception (104),
∘ Sur la surface de réception (104), un motif saillant (11) et un deuxième motif saillant (12), émergeant chacun par rapport à ladite surface de réception,
∘ Un canal fluidique d'entrée (13) et un canal fluidique de sortie (14) distincts, intégrés au corps (10) dudit composant et débouchant chacun respectivement au niveau du premier motif saillant et/ou du deuxième motif saillant,
- Un composant microfluidique (2) distinct du composant support (1), comprenant :
∘ Un circuit électrique,
∘ Un circuit fluidique comprenant au moins une entrée fluidique (23) et une sortie fluidique (24),
- Ledit composant microfluidique (2) comportant une première face agencée pour venir en appui contre le premier motif saillant (11) et le deuxième motif saillant (12) pour être surélevé par rapport à la surface de réception,
- Des moyens d'étanchéité agencés entre ledit composant microfluidique (2) et ledit composant support (1) pour assurer des connexions fluidiques étanches d'une part entre le canal fluidique d'entrée (13) du composant support et l'entrée fluidique (23) du composant microfluidique et d'autre part entre le canal fluidique de sortie (14) du composant support et la sortie fluidique (24) du composant microfluidique, lorsque le composant microfluidique est positionné en appui contre le premier motif saillant et le deuxième motif saillant,
- Un système de bridage mécanique comprenant au moins une entretoise (41, 42) agencée pour prendre appui contre une deuxième face du composant microfluidique, opposée à sa première face,
- Ledit système de bridage mécanique comportant au moins un capot (5) fixé sur le composant support (1) contre ladite entretoise et agencé pour maintenir ledit composant microfluidique (2) en appui contre le premier motif saillant (11) et le deuxième motif saillant (12), et pour assurer lesdites connexions fluidiques étanches,
- Des moyens de connexion électrique comprenant plusieurs plots (60) de contact électrique agencés pour se connecter sur le circuit électrique du composant microfluidique.

2. Dispositif selon la revendication 1, **caractérisé en ce que** le corps (10) du composant support (1) comporte une cavité (100) au fond de laquelle sont agencés le premier motif saillant (11) et le deuxième motif saillant (12).

3. Dispositif selon la revendication 2, **caractérisé en ce que** le corps (10) du composant support comporte un passage latéral (101) débouchant dans ladite cavité (100).

4. Dispositif selon la revendication 2 ou 3, **caractérisé en ce que** ladite au moins une entretoise est formée d'une pièce indépendante en matériau souple.

5. Dispositif selon la revendication 4, **caractérisé en ce que** le corps (10) du composant support comporte au moins deux encoches réalisées en périphérie de la cavité (10) et agencées pour recevoir chacune une extrémité distincte de ladite au moins une entretoise.

6. Dispositif selon l'une des revendications 1 à 5, **caractérisé en ce que** le rapport entre la surface de contact du composant microfluidique contre les deux motifs saillants et la surface de sa première face est compris entre 0.1 et 0.5.

7. Dispositif selon l'une des revendications 1 à 6, **caractérisé en ce que** les moyens de connexion électrique comportent une carte de connexion électrique sur laquelle sont agencés lesdits plots (60) de contact électrique.

8. Dispositif selon la revendication 7, **caractérisé en ce que** le capot (5) comporte plusieurs trous traversants (51) traversés chacun par un plot (60) de contact électrique distinct.

9. Dispositif selon l'une des revendications 1 à 8, **caractérisé en ce que** les moyens d'étanchéité comportent des joints plats ou toriques.

10. Dispositif selon l'une des revendications 1 à 9, **caractérisé en ce que** le circuit électrique du composant microfluidique comporte une résistance chauffante.

11. Dispositif selon l'une des revendications 1 à 10, **caractérisé en ce que** le circuit fluidique du composant microfluidique comporte une cavité remplie d'un matériau adsorbant, agencée entre son entrée fluidique (23) et sa sortie fluidique (24).
